# FASCICULE DE BREVET EUROPEEN

(11) **EP 0 418 202 B1**
(45) Date de publication et mention de la délivrance du brevet: **08.02.1995**
(21) Numéro de dépôt: 90810697.4
(22) Date de dépôt: 14.09.1990
(51) Int. Cl.: G01D 5/26, G01J 9/02

(54) **Capteur optique à interférométrie intermodale**
Optischer Sensor mit Modeninterferenzmessung
Optical sensor with intermodal interferometry

(30) Priorité: 15.09.1989 CH 3374/89
(43) Date de publication de la demande: 20.03.1991
(73) Titulaire: CENTRE SUISSE D'ELECTRONIQUE ET DE MICROTECHNIQUE S.A., 2007 Neuchâtel (CH)
(72) Inventeur: Kotrotsios, Georges, CH-2000 Neuchâtel (CH); Parriaux, Olivier, CH-1005 Lausanne (CH)
(74) Mandataire: Brulliard, Joel

(56) Documents cités:
- GB-A- 2 150 687
- US-A- 4 342 907
- US-A- 4 854 706
- IBM TECHNICAL DISCLOSURE BULLETIN, vol. 27, no. 6, novembre 1984, New York, US, page 3622, R.T. Hodgeson et al: "Position sensor using fiber-optic interferometer"
- JOURNAL OF THE INSTITUTION OF ELECTRONIC & RADIO ENGINEERS, vol. 58, no. 5, août 1988, London, GB, pages S99-S111; A.D. Kersey et al: "Distributed and multiplexed fibre-optic sensor systems"
- JOURNAL OF PHYSICS E: SCIENTIFIC INSTRUMENTS, vol. 20, no. 8, août 1987, pages 954-967; J.P. Dakin: "Multiplexed and distributed optical fibre sensor systems"
- "Birefringent stress location sensor", R.B. Franks et al., Proceedings of the Society of Photo-Optical Instrumentation Engineers, vol. 586, Fiber Optical Sensors, 1985

## Description

La présente invention se rapporte, de manière générale, aux capteurs distribués à couplage de modes engendré par une perturbation dont on veut déterminer la position le long d'un guide de lumière et concerne plus particulièrement un capteur optique à interférométrie intermodale.

Le document "Birefringent stress location sensor" (R.B. Franks et al., SPIE, vol. 586, Fiber Optic Sensors 1985) montre un capteur distribué utilisant une source laser, modulée en fréquence, injectant un seul mode dans une fibre optique biréfringente ou monomode utilisée comme une fibre bimodale. Sous l'effet d'un paramètre extérieur, une perturbation - en l'occurence des microcourbures - engendre un couplage de modes donnant naissance à la propagation d'un deuxième mode dans la fibre. La détection est réalisée par interférométrie intermodale. La détermination de la position de la perturbation est déduite de la mesure de la fréquence de battement du signal de détection.

Les problèmes posés par cette solution sont multiples. La mesure du taux de couplage et la détermination de la position dudit couplage le long de la fibre, sont rendues difficiles par des problèmes :
- de linéarité de la rampe de fréquence du signal de modulation,
- de stabilité de la source,
- de rétrodiffusion et
- d'atténuation de la détection due à la polarisation et au mélange des modes.

Aussi un objet de l'invention est-il un capteur optique permettant la détermination de la position d'une perturbation le long d'une fibre optique, ne présentant pas les inconvénients mentionnés ci-dessus et apportant une solution aux problèmes évoqués précédemment.

Un autre objet est un capteur optique dont la détermination de la position de la perturbation se fait par interférométrie inter-modale.

Les caractéristiques de l'invention sont définies dans les revendications.

Les avantages principaux de cette invention résident dans le fait que la dynamique du système et la résolution spatiale sont augmentées par rapport à celles des solutions connues. Comme le capteur travaille en transmission, presque toute l'énergie injectée est détectée. L'électronique reste identique, que le système comporte un seul ou plusieurs transducteurs. La source de lumière, notamment en ce qui concerne sa polarisation et sa stabilité, ne nécessite pas des caractéristiques des plus strictes. Contrairement à un système optique par réflectométrie optique dans le domaine temporel (OTDR) ou fréquentiel (OFDR), le capteur de l'invention ne nécessite pas de moyennage sur un grand nombre de mesures et de ce fait le temps de réponse du système est plus court.

D'autres objets, caractéristiques et avantages de la présente invention apparaîtront plus clairement à la lecture de la description suivante faite en relation avec les dessins joints dans lesquels :
- la fig. 1: est une représentation synoptique du capteur optique à interférométrie intermodale de l'invention et
- la fig. 2: est un exemple de réalisation du capteur optique.

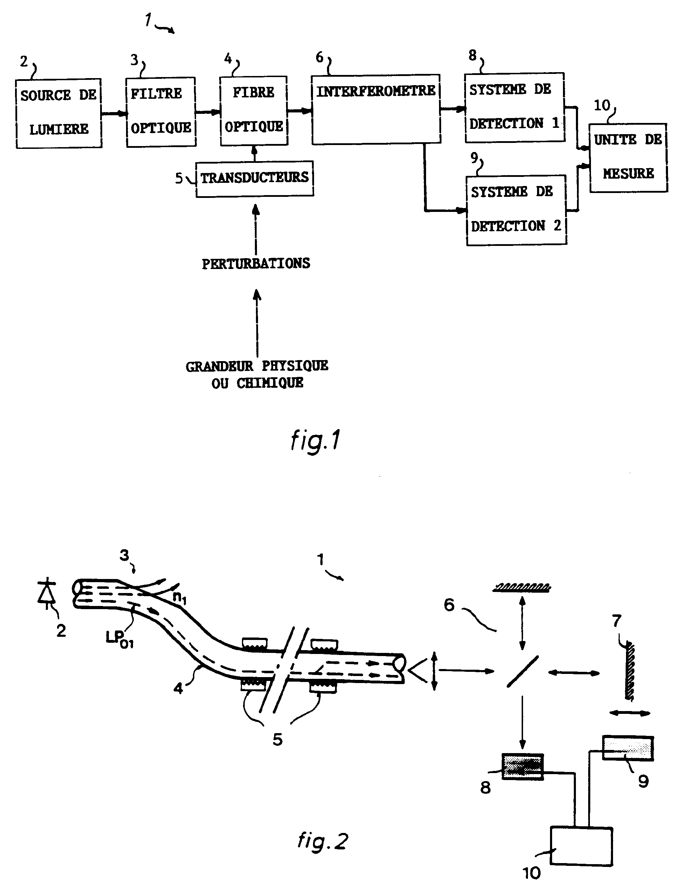

La fig. 1 est une représentation synoptique du capteur à fibre optique selon l'invention.

Le capteur optique à interférométrie intermodale 1 comporte, principalement, en suivant le trajet optique, une source de lumière 2, une fibre optique bimodale 4 le long de laquelle sont répartis des transducteurs 5, un interféromètre 6, un premier 8 et un deuxième 9 systèmes de détection connectés à une unité de mesure 10.

Un filtre de modes 3 peut être utilisé à l'entrée de ladite fibre optique. La première extrémité de la fibre optique est alors connectée audit filtre de modes 3. En l'absence de filtre de modes à l'entrée de ladite fibre optique, la liaison source de lumière et fibre optique constituerait un premier transducteur. Dans tous les cas, la deuxième extrémité fait face audit interféromètre.

Le capteur optique à interférométrie intermodale utilise une source de lumière 2 émettant une onde de lumière non monochromatique.

Le filtrage des modes autres que le mode fondamental LP₀₁ ou le mode de polarisation est effectué à l'entrée de la fibre optique 4 par le filtre de modes 3.

La fibre optique 4, qui est monomode dans une gamme donnée de longueur d'ondes, par exemple autour de 1,3 »m, propage en fait des ondes de plus faible longueur d'onde, par exemple 0,8 »m.

La fibre optique 4 peut être soumise, par l'intermédiaire des transducteurs 5 à une ou plusieurs perturbations, localisées ou distribuées, engendrées par la grandeur physique ou chimique à détecter. Sous l'effet d'une telle perturbation, le mode injecté se propageant dans la fibre optique 4 peut être couplé à un mode d'ordre supérieur. Les deux modes se propagent alors dans le guide avec un taux de couplage dépendant de l'amplitude de la perturba-tion et à des vitesses de propagation différentes.

A l'entrée de l'interféromètre on observe une différence de temps d'arrivée entre le mode injecté et le mode couplé. Le temps de retard entre ces modes est proportionnel à la différence entre les chemins optiques parcourus, dans la fibre optique bimodale, par chacun des modes. C'est la différence entre les vitesses de propagation des deux modes qui entraînent une différence entre les chemins optiques. La détermination de cette différence entre chemins optiques permet de déduire la position de la perturbation ayant donné naissance au mode couplé.

Cette détermination est faite en injectant l'onde lumineuse sortant de la fibre optique dans l'interféromètre. La mesure porte, dans un premier temps, sur le produit d'interférence délivré en sortie de l'interféromètre.

Des interférences entre les ondes lumineuses se propageant dans chacune des deux branches de l'interféromètre sont obtenues dans deux cas :
. lorsque les deux chemins optiques de l'interféromètre sont égaux, ceci indépendemment des perturbations le long de la fibre optique et
. lorsque la différence de chemin optique entre les deux branches de l'interféromètre compense la différence entre les chemins optiques parcourus dans la fibre par chacun des modes.

Dans le premier cas chaque mode interfère avec lui-même.

L'introduction d'une différence de chemin optique entre les deux branches de l'interféromètre est obtenue par une modification de la longueur et/ou de l'indice de réfraction d'au moins une des branches de l'interféromètre. La modification de la longueur d'une branche de l'interféromètre est obtenue, par exemple dans le cas d'un interféromètre du type Michelson, en déplaçant le miroir mobile (référence 7 dans la fig. 2) dudit interféromètre. Chacune des variations apportées permet la compensation du temps de retard entre modes à l'entrée de l'interféromètre, temps de retard défini par chacun des transducteurs répartis le long de la fibre.

En d'autres termes, chaque transducteur réparti le long de la fibre optique est associé, de manière biunivoque, à une variation donnée. Il découle de ce qui précède que la mesure porte également sur ladite variation.

Les premier et deuxième systèmes de détection détectent, respectivement, le maximum du produit d'interférence et la variation correspondante. L'unité de mesure déduit de ces mesures la position de la perturbation le long de la fibre optique.

A titre d'exemple, pour une longueur de fibre de un mètre la différence entre les temps de propagation des modes est de l'ordre de 2 picosecondes, pour une source constituée d'une diode électroluminescente de longeur d'onde de 880 nm.

La précision obtenue sur la détermination de la position de la perturbation est fonction de la précision avec laquelle le premier système de détection peut localiser le maximum de l'amplitude des franges d'interférence. Une résolution inférieure à 50 »m a pu être obtenue, soit une résolution temporelle inférieure à 0.2 picoseconde. Cet intervalle temporel correspond à une propagation dans la fibre bimodale de 5 mm. En d'autres termes, la résolution spatiale du capteur optique à interférométrie intermodale est inférieure à 5 mm.

Le nombre total des transducteurs que l'on peut multiplexer, par exemple dans la plage de déplacement du miroir mobile d'un interféromètre de type Michelson, dépend de la largeur du phénomène d'interférence intermodale. Ladite largeur est égale à la longueur de cohérence de la source de lumière. En d'autres termes, le nombre total de transducteurs pouvant être multiplexé est donné par le rapport plage de déplacement du miroir mobile sur longueur de cohérence de la source.

A titre d'exemple : pour une source de largeur spectrale à mi-hauteur de 70 nm et de longueur de cohérence de 700 »m et pour un interféromètre autorisant une plage de déplacement du miroir mobile de 40 mm, le nombre de transducteurs est voisin de 55.

La fig. 2 représente un premier exemple de réalisation selon lequel la source lumineuse 2 est une diode laser multimode. Les modes autres que le mode guidé fondamental LP₀₁ sont filtrés à l'entrée de la fibre optique 4 par un filtre de modes 3. Celui-ci est constitué par une fibre polie latéralement dans laquelle seul reste guidé le mode fondamental, les modes d'ordre supérieur étant radiés vers l'extérieur. Pour cela l'indice n₁ du milieu extérieur entourant ladite fibre polie doit satisfaire la relation : n₁₁<n₁<n₀₁, n₀₁ et n₁₁ représentant, respectivement, les indices effectifs du mode fondamental LP₀₁ et du mode d'ordre un LP₁₁. La fibre optique 4, monomode dans une gamme donnée de longueurs d'ondes, typiquement autour de 1,3 »m, qui propage le mode fondamental de longueur d'onde plus faible, typiquement 0,8 »m, est soumise à des perturbations transmises par des transducteurs 5 distribués le long de ladite fibre. Les transducteurs peuvent être simultanément actifs. Lesdits transducteurs 5 engendrent des microcourbures de la fibre de période spatiale Λ, déterminée de façon à ce que l'expression Λ = λ₀ (nₑ₀₁ - nₑ₀₁₁),
où λ₀ est la longueur d'onde centrale de la source
nₑ₀₁ l'indice effectif du mode fondamental LP₀₁
nₑ₁₁ l'indice effectif du mode d'onde un LP₁₁,
soit vérifiée.

Le capteur optique à interférométrie intermodale se compose de manière générale d'une source de lumière 2 couplée à un filtre de modes 3 pouvant être : une fibre polie telle que décrite par R.A. BERGH et al., "Single-mode fiber-optic polarizer," Optics Letters/ Vol. 5, No. 11/ November 1980, pp. 479-481, deux fibres - l'une bimodale, l'autre monomode - connectées bout à bout ou encore une fibre biseautée par étirage sous haute température (cf. V. SHAH et al. / "Biconical tapered fiber-mode filter for bimodal systems" / OFC 88 / WQ 13).

La fibre optique 4 est une fibre monomode à une longueur d'onde donnée et fonctionnant à une longueur d'onde inférieure, les modes susceptibles de se propager étant des modes guidés : mode fondamental LP₀₁, mode d'ordre un LP₁₁ et éventuellement modes d'ordre supérieur.

La fibre optique 4 peut encore être une fibre biréfringente propageant des modes de polarisation.

Les transducteurs disposés le long de la fibre optique sont tous dispositifs, tels les transducteurs à microcourbures, permettant d'engendrer un couplage entre modes sous l'action du paramètre à détecter. Une fibre optique monomode ou bimodale faisant face à une fibre optique bimodale peut être utilisée comme transducteur à couplage de modes.

L'interféromètre est du type Michelson, du type Mach-Zehnder ou encore du type Fabry-Perot.

La source de lumière est une photodiode non monochromatique, par exemple une photodiode KFD-1060 de la société EG. & G. Photon Devices. Cette photodiode est associée à des composants électroniques externes qui déterminent la bande passante de 80 KHz nécessaire a la détection du produit d'interférence. Du fait de la symétrie des modes LP devant interférer, la détection ne doit porter que sur la partie négative ou positive du produit d'interférence, afin que ces deux parties ne se compensent pas.

Le capteur optique de l'invention est utilisé pour détecter et déterminer la position d'une variation d'un paramètre d'environnement et est utilisé, par exemple, comme détecteur d'intrusion, de force, de pression ou de température, ou encore comme capteur d'hydrogène.

## Revendications

1. Capteur optique à interférométrie intermodale comportant des moyens optiques permettant respectivement
. l'injection dans une fibre optique bimodale (4) de ladite onde lumineuse;
. le guidage de ladite onde lumineuse au moyen d'une fibre optique bimodale;
et des moyens répartis le long de ladite fibre optique bimodale permettant le couplage du mode fondamental LP₀₁ ou du mode de polarisation de ladite onde lumineuse injecté au mode d'ordre un LP₁₁ ou au mode de polarisation orthogonale, respectivement; ledit capteur étant caractérisé en ce que le moyen optique d'émission du mode injecté est une source non monochromatique et en ce qu'il comporte en outre
- un interféromètre (6) permettant la compensation de la différence du temps de retard entre modes couplés à l'entrée de l'interféromètre, par modification des conditions d'interférence dudit interféromètre;
- des moyens électriques permettant
. la mesure de ladite modification apportée audit interféromètre;
. la détection, en intensité, dudit produit d'interférence;
. la détermination de la position, le long de ladite fibre optique bimodale, de la perturbation ayant créé le couplage intermodal.

2. Capteur optique à interférométrie intermodale selon la revendication 1, caractérisé en ce qu'il comporte un moyen optique permettant le filtrage des modes autres que ledit mode injecté.

3. Capteur optique à interférométrie intermodale selon la revendication 2, caractérisé en ce que le moyen optique de filtrage des modes autres que le mode injecté est un filtre de modes (3) constitué
soit d'une fibre bimodale connectée à une fibre monomode,
soit d'une fibre bimodale polie ou
soit d'une fibre biseautée par étirage sous haute température,
guides d'ondes dans lesquels ne subsiste que le mode guidé fondamental LP₀₁ ou le mode de polarisation, les autres modes étant purgés.

4. Capteur optique à interférométrie intermodale selon la revendication 1, caractérisé en ce que les moyens de guidage d'ondes sont composés
soit d'une fibre optique monomode pour une gamme donnée de longueurs d'ondes et fonctionnant dans une gamme de longueurs d'ondes plus basses permettant la propagation de modes guidés non couplés ou
soit d'une fibre optique biréfringente permettant la propagation de modes de polarisation.

5. Capteur optique à interférométrie intermodale selon la revendication 1, caractérisé en ce que le système interférométrique se compose:
soit d'un interféromètre de type Michelson,
soit d'un interféromètre de type Mach-Zehnder,
soit d'un interféromètre de type Fabry-Perot.

6. Capteur optique à interférométrie intermodale selon la revendication 1, caractérisé en ce que les moyens répartis le long de la fibre optique (4) sont :
- soit des transducteurs engendrant des microcourbures de périodes spatiales données,
- soit une fibre optique monomode faisant face à une fibre optique bimodale,
- soit une fibre optique bimodale faisant face à une fibre optique bimodale.

## Patentansprüche

1. Optischer intermodal-interferometrischer Sensor, einschliessend optische Mittel, die ermöglichen,
· die Injektion einer Lichtwelle in eine optische bimodale Faser (4);
· die Führung der Lichtwelle mittels einer optischen bimodalen Faser;
und längs der Lange der genannten optischen bimodalen Faser verteilte Mittel, die das Koppeln des Grundmodus LP₀₁ oder des Polarisationsmodus der injizierten Lichtwelle mit dem Modus der Ordnung eins LP₁₁ bzw. dem orthogonalen Polarisationsmodus ermöglichen; dadurch gekennzeichnet, daß das optische Mittel der Emission des injizierten Modus eine nicht monochromatische Quelle ist, und daß:
- ein Interferometer (6), das die Kompensation der Differenz der Zeitverzögerung zwischen den gekuppelten Moden am Eingang des Interferometers ermöglicht durch Modifikation der Bedingungen der Interferenz des Interferometers;
- elektrische Mittel, die ermöglichen
· die Messung der genannten Modifikation, die an dem Interferometer vorgenommen wurde,
· die Erkennung der Intensitat des Interferenzprodukts,
· die Bestimmung der Position auf der Lange der bimodalen optischen Faser der Störung, welche die intermodale Kopplung erzeugt hatte;
eingeschlossen sind.

2. Intermodal-interferometrischer optischer Sensor nach Anspruch 1, dadurch gekennzeichnet, daß er ein optisches Mittel umfaßt, das die Filterung der Moden, abweichend von dem injizierten Modus ermöglicht.

3. Intermodal-interferometrischer optischer Sensor nach Anspruch 2, dadurch gekennzeichnet, daß das optische Mittel zum Ausfiltern von Moden, die von dem injizierten Modus abweichen, ein Modenfilter (3) ist, gebildet
entweder von einer bimodalen Faser, angeschlossen an eine monomodale Faser oder
eine polierte bimodale Faser oder
eine durch Ziehen bei hoher Temperatur sich verjüngende Faser,
ein Wellenleiter, in dem nur der geführte Grundmodus LP₀₁ oder der Polarisationsmodus existiert, während die anderen Moden entfernt werden.

4. Intermodal-interferometrischer optischer Sensor nach Anspruch 1, dadurch gekennzeichnet, daß die Mittel zum Führen der Welle bestehen aus entweder einer monomodalen optischen Faser für einen gegebenen Bereich von Wellenlängen und in einem Wellenlängenbereich arbeitend, der niedriger ist unter Ermöglichung der Ausbreitung nicht gekoppelter geführter Moden oder aus einer birefringenten optischen Faser, welche die Ausbreitung von Polarisationsmoden ermöglicht.

5. Intermodal-interferometrischer optischer Sensor nach Anspruch 1, dadurch gekennzeichnet, daß das interferometrische System besteht aus: entweder einem Interferometer vom Michelson-Typ, oder einem Interferometer vom Mach-Zehnder-Typ, oder einem Interferometer vom Fabry-Perot-Typ.

6. Intermodal-interferometrischer optischer Sensor nach Anspruch 1, dadurch gekennzeichnet, daß die längs der optischen Faser (4) verteilten Mittel sind:
- entweder Wandler, welche Mikrokrümmungen gegebener räumlicher Perioden erzeugen,
- oder eine monomodale optische Faser, die einer bimodalen optischen Faser gegenüberliegt,
- oder eine bimodale optische Faser, die einer optisch bimodalen Faser gegenüberliegt.

## Claims

1. Optical sensor with intermodal interferometry, comprising optical means enabling respectively
- the injection of a light wave into a bimodal optical fibre (4);
- the guiding of the said light wave by means of a bimodal optical fibre;
and means distributed along the said bimodal optical fibre enabling the fundamental mode LP₀₁ or the polarisation mode of the said injected light wave to the first-order mode LP₁₁ or orthogonal polarisation mode, respectively; said optical sensor being characterised in that the optical means of emitting the injected mode is a non-monochromatic source and in that it further comprises:
· an interferometer (6) enabling the difference in delay between modes coupled to the entry to the interferometer to be compensated for, by modification of the interference conditions of the said interferometer;
· electrical means enabling
- measurement of the said modification made to the said interferometer;
- detection, in intensity, of the said interference product;
- determination of the position, along the said bimodal optical fibre, of the perturbation which created the intermodal coupling.

2. Optical sensor with intermodal interferometry according to claim 1, characterised in that it includes an optical means enabling modes other than the said injected mode to be filtered.

3. Optical sensor with intermodal interferometry according to claim 2, characterised in that the optical means for filtering modes other than the injected mode is a mode filter (3) consisting of
- a bimodal fibre connected to a monomode fibre, or
- a polished bimodal fibre, or
- a fibre tapered by drawing at high temperature,
waveguides in which only the fundamental guided mode LP₀₁ or the polarisation mode remain, the other modes being eliminated.

4. Optical sensor with intermodal interferometry according to claim 1, characterised in that the wave guidance means consist of
- a monomode optical fibre for a given range of wavelengths, functioning in a range of lower wavelengths allowing the propagation of non-coupled guided modes, or
- a birefringent optical fibre allowing the propagation of polarisation modes.

5. Optical sensor with intermodal interferometry according to claim 1, characterised in that the interferometry system consists of:
- an interferometer of the Michelson type, or
- an interferometer of the Mach-Zehnder type, or
- an interferometer of the Fabry-Perot type.

6. Optical sensor with intermodal interferometry according to claim 1, characterised in that the means distributed along the optical fibre (4) are:
- transducers generating microcurvatures of given spatial periods, or
- a monomode optical fibre facing a bimodal optical fibre, or
- a bimodal optical fibre facing a bimodal optical fibre.
